# EUROPEAN PATENT APPLICATION

(11) **EP 4 406 992 A1**
(43) Date of publication of application: **31.07.2024**
(21) Application number: 22871866.4
(22) Date of filing: 15.09.2022
(51) Int. Cl.: C08G 69/40, C08K 7/14, C08K 5/5313, C08K 5/3492, C08L 77/06

(54) **FURAN DIACID-BASED POLYAMIDE RESIN, PREPARATION METHOD THEREFOR, AND POLYAMIDE MOLDING COMPOSITION**

(30) Priority: 24.09.2021 CN 202111122742
(71) Applicant: ZHUHAI VANTEQUE SPECIALTY ENGINEERING PLASTICS CO., LTD., Guangdong 519050 (CN); KINGFA SCI. & TECH. CO., LTD., Guangzhou, Guangdong 510663 (CN)
(72) Inventor: YAN, Kun, Zhuhai, Guangdong 519050 (CN); XU, Xianjun, Zhuhai, Guangdong 519050 (CN); JIANG, Sujun, Zhuhai, Guangdong 519050 (CN); CAO, Min, Zhuhai, Guangdong 519050 (CN); MAI, Jiehong, Zhuhai, Guangdong 519050 (CN); YANG, Huixin, Zhuhai, Guangdong 519050 (CN); JIANG, Zhiqiang, Zhuhai, Guangdong 519050 (CN)
(74) Representative: Petraz, Gilberto Luigi
(86) International application number: PCT/CN2022/118963
(87) International publication number: WO 2023/045819

(57) **Abstract**

Disclosed is a furan diacid-based polyamide resin, which is derived from the following repeating units: (A) 2,5-furandicarboxylic acid, (B) 1,4-cyclohexanedicarboxylic acid, and (C) 1,10-decanediamine, where based on the total molar percentage of the diacid units, (A) accounts for 5-45 mol% of the diacid units. On one hand, by selecting the bio-based 2,5-furandicarboxylic acid, the resin is more environmentally friendly, and has the advantages of a melting point of 290-336°C , low water absorption rate, and good size stability (a water absorption rate lower than that of a polyamide with the same amido bond density); on the other hand, the rigidity of cyclohexane is higher than that of an aromatic ring, such that more hard carbon layers can be formed during combustion. In addition, the furan diacid-based polyamide has a relatively high amido bond density, and can generate a relatively excellent synergistic effect with a flame retardant, such that the flame retardant effect is excellent under the synergistic effect of the two.

## Description

### TECHNICAL FIELD

The present invention relates to the technical field of high polymer materials, and in particular to a furan diacid-based polyamide resin, a preparation method thereof, and a polyamide molding composition.

### BACKGROUND

The traditional polyamide monomer is mainly derived from petroleum. Nowadays, people are being faced with the problems of excessive petroleum resource consumption, soared carbon dioxide emissions and aggravated greenhouse effect. The decrease of the petroleum-based monomer's consumption can inhibit the carbon dioxide emissions to prevent greenhouse effect, solve the problems of environmental pollution and resource shortage, thereby building a sustainable-development society. Bio-based high temperature resistant polyamide refers to polyamide obtained from the polymerization of bio-based aliphatic diamines or arylcyclodiacids. The bio-based monomer is generally extracted by animals and plants, which, on the one hand, can achieve green and sustainable development, on the other hand, can diversify high temperature resistant polyamide products, thus satisfying the demands of the more subdivisional industries.

Through market survey and analysis, the bio-based monomers decanediamine, pentanediamine and furandicarboxylic acid are regarded as the bio-based high temperature resistant polyamide monomer materials which are most likely to achieve a substantive breakthrough. Decanediamine is derived from plant castor oil and has achieved mass production at home; but due to its higher price, the market competitiveness is weak.

Pentanediamine is derived from glutamic acid fermentation and has achieved mass production at home; and the market competitiveness is good because of its lower price. Furandicarboxylic acid is the only one known bio-based arylcyclodiacid monomer which is most likely to achieve industrialization currently. The domestic and overseas studies on furandicarboxylic acid are being in the trial development stage at present.

Chinese patent application CN106536187A discloses a furan-based polyamide; the bio-based monomer furan 2,5-dicarboxylic acid is used and the diamine is aliphatic diamine, aromatic diamine, etc.; the furan-based polyamide has good gas barrier properties. However, the gas barrier properties are mainly achieved by polymerizing a short carbon chain diamine (1,3 propane diamine) to increase the amido bond density. In contrast, the furan polyamide has poor flame retardance.

### SUMMARY

The object of the present invention is to provide a furan diacid-based polyamide which has the advantages of good flame retardance, high melting point, low water absorption rate, and bio-base.

Another object of the present invention is to provide a composition containing the aforesaid furan diacid-based polyamide.

The present invention is achieved by the following technical solution:

A furan diacid-based polyamide resin is derived from the following repeating units: (A) 2,5-furandicarboxylic acid, (B) 1,4-cyclohexanedicarboxylic acid, and (C)1,10-decanediamine, wherein based on a total molar percentage of the diacid units, (A) accounts for 5-45 mol% of the diacid units.

Preferably, based on a total molar percentage of the diacid units, (A) accounts for 5-25mol% of the diacid units.

More preferably, based on a total molar percentage of the diacid units, (A) accounts for 5-15 mol% of the diacid units.

Preferably, the water absorption rate and shrinkage rate are lower at a preferable content of the (A) in the diacid units.

The furan diacid-based polyamide resin has a relative viscosity of 1.8-2.4.

The furan diacid-based polyamide resin has a melting point of 290-336°C.

The furan diacid-based polyamide resin has a water absorption rate of less than or equal to 1.5%.

The furan diacid-based polyamide resin has a lateral/longitudinal shrinkage rate of less than or equal to 0.2%/0.5%.

Reaction materials (diamine and diacid) are added to a pressure reactor provided with magnetic coupling stirring, a condenser tube, a gas phase port, a feeding port, and a pressure explosion-proof port; benzoic acid, sodium hypophosphite (catalyst) and deionized water are added; the amount of benzoic acid is 2-3% of a total weight of diamine and diacid, the amount of sodium hypophosphite is 0.05-0.15% of a weight of other materials other than deionized water, and the amount of deionized water is 25-35% of a weight of the total materials; the pressure reactor is vacuumized and pumped with high-purity nitrogen as a shielding gas, heated up to 210-230°C within 2 h under stirring conditions, and then the reaction mixture is stirred for 0.5-2 h at 210-230°C. The reactant is heated up to 220-240°C under stirring conditions, the reaction proceeds for 1-3 h at a constant temperature of 220-240°C and a constant pressure of 2.1-2.3 MPa; the pressure is kept constant by removing water formed, discharging is performed after finishing the reaction; a prepolymer is vacuum dried at 70-90°C to obtain a prepolymerized product, and the prepolymerized product is subjected to solid phase viscosification for 8-12 h at 240-260°C and a vacuum condition of 40-60 Pa, to obtain the furan diacid-based polyamide resin.

A polyamide molding composition includes the following components in parts by weight:
40-70 parts of the aforesaid furan diacid-based polyamide resin of the present invention;
10-30 parts of a halogen-free flame retardant; and
0-50 parts of a reinforcing material.

The halogen-free flame retardant is selected from at least one of the group consisting of a phosphine flame retardant, a hypophosphorous acid ester flame retardant, a hypophosphorous acid salt flame retardant, a phosphinate ester flame retardant, a phosphinate salt flame retardant, a phosphite ester flame retardant, a phosphite salt flame retardant, a phosphine oxide flame retardant, a hypophosphite ester flame retardant, a hypophosphite salt flame retardant, a phosphonate ester flame retardant, a phosphonate salt flame retardant, a phosphate ester flame retardant, and a polyphosphate flame retardant; the hypophosphite salt flame retardant is selected from at least one of the group consisting of aluminum hypophosphite, calcium hypophosphite, aluminum dimethylhypophosphite, aluminum diethylhypophosphite, and aluminum methylethylhypophosphite; the phosphate ester flame retardant is selected from at least one of the group consisting of bisphenol A bis(diphenyl phosphate), phenoxyphosphonitrile, resorcinol (diphenyl phosphate), triphenyl phosphate, melamine polyphosphate and melamine cyanurate; and the polyphosphate flame retardant is selected from at least one of the group consisting of ammonium polyphosphate, melamine phosphate, melamine pyrophosphate and melamine polyphosphate.

The reinforcing material is selected from at least one of the group consisting of a fibrous filler and a nonfibrous filler; the fibrous filler is selected from at least one of the group consisting of a glass fiber, a carbon fiber, a basalt fiber, a bamboo fiber, fibrilia, a cellulosic fiber and an aramid fiber; and the nonfibrous filler is selected from at least one of the group consisting of aluminium oxide, carbon black, clay, zirconium phosphate, kaolin, calcium carbonate, copper powder, kieselguhr, graphite, mica, silica, titanium dioxide, zeolite, talc, wollastonite, glass bead and glass powder.

The polyamide molding composition of the present invention may be used for preparing various types of electronic connector devices in need of surface mount technology (SMT) such as USB, TYPE-C, and DDR. These electronic parts and components are highly demanding for the melting point, water absorption rate, and dimensional stability of materials.

Compared with the prior art, the present invention has the following beneficial effects
1. Diacid units in the furan diacid-based polyamide resin of the present invention all contain rigid rings, of which cyclohexane has a rigidity higher than that of the aromatic ring and may form more hard carburized layers during combustion. Moreover, the polyamide resin of the present invention has a higher amido bond density and thus, may form an excellent synergistic effect with a fire retardant and according has a good flame retardant efficiency.
2. In the present invention, the polyamide prepared by adjusting the ratio of furandicarboxylic acid to cyclohexanedicarboxylic acid has a melting point of 290-336°C and thus, has good temperature tolerance and machinability.
3. The furan diacid-based polyamide of the present invention has the advantages of low water absorption rate and high dimensional stability.

### DETAILED DESCRIPTION OF EMBODIMENTS

The present invention will be further specified in detail with reference to the detailed examples below. The following examples will help those skilled in the art further understand the present invention, but are not construed as limiting the present invention in any form. It should be indicated that those skilled in the art may further make several deformations and improvements without departing from the inventive concept of the present invention. These all fall within the protection scope of the present invention.

Raw materials used in the present invention are derived from the followings:
2,5-furandicarboxylic acid: purity of 98%, purchased from Ningbo Institute of Materials Technology & Engineering, Chinese Academy of Sciences;
1,4-cyclohexanedicarboxylic acid: purity of 98%, purchased from Sigma-Aldrich;
1,6-hexanedioic acid: purity of 98%, purchased from Sigma-Aldrich;
Terephthalic acid: purity of 98%, purchased from Sigma-Aldrich;
1,10-decanediamine: purity of 98%, purchased from Wuxi Yinda Nylon Co., Ltd.;
1,5-pentanediamine: purity of 98%, purchased from Shanghai Kaisai Chemical Co., Ltd.;
1,6-hexamethylenediamine: purity of 98%, purchased from Sigma-Aldrich;
Benzoic acid: analytically pure, purchased from Sigma-Aldrich;
Sodium hypophosphite: analytically pure, purchased from Sigma-Aldrich;
Halogen-free flame retardant A: aluminum diethylphosphinate, OP1230, phosphorus mass percentage of 23-24%, purchased from Clariant;
Halogen-free flame retardant B: melamine polyphosphate, MELAPUR200-70, nitrogen mass percentage of 42-44%, phosphorus mass percentage of 12-14%, purchased from BASF; and
reinforcing material: glass fiber, ECS 1 1-4.5-560A, mean diameter of 11 µm, purchased from JUSHI, China.

The polyamide resins in the examples and comparative examples were obtained by the same polymerization process below: reaction materials (diamine and diacid) were added to a pressure reactor provided with magnetic coupling stirring, a condenser tube, a gas phase port, a feeding port, and a pressure explosion-proof port according to the proportion in the table; benzoic acid, sodium hypophosphite (catalyst) and deionized water were added; the amount of benzoic acid was 2% of a total weight of diamine and diacid, the amount of sodium hypophosphite was 0.08% of a weight of other materials other than deionized water, and the amount of deionized water was 25% of a weight of the total materials; the pressure reactor was vacuumized and pumped with high-purity nitrogen as a shielding gas, heated up to 230°C within 2 h under stirring conditions, and then the reaction mixture was stirred for 0.5-2 h at 220°C; the reactant was then heated up to 240°C under stirring conditions; the reaction proceeded for 1-3 h at a constant temperature of 240°C and a constant pressure of 2.3 MPa; the pressure was kept constant by removing water formed, discharging was performed after finishing the reaction; a prepolymer was vacuum dried at 70-90°C to obtain a prepolymerized product, and the prepolymerized product was subjected to solid phase viscosification for 8-12 h at 260°C and a vacuum condition of 50 Pa, to obtain the furan diacid-based polyamide resin (or furan diacid-free polyamide resin).

Test method:
(1) Test method for the relative viscosity of polyamide resin: referring to GB12006.1-89 Determination of viscosity number of polyamide; the specific test method is as follows: a relative viscosity ηr of the polyamide having a concentration of 0.25 g/dl in 98% concentrated sulfuric acid at 25±0.01°C;
(2) Test method for the melting point of polyamide: referring to ASTM D3418-2003, Standard Test Method for Transition Temperatures of Polymers By Differential Scanning Calorimetry; the specific test method is as follows: the melting point of a sample was tested by a Perkin Elmer Dimond DSC analysis meter at the atmosphere of nitrogen and a flow rate of 50 mL/min; the sample was first heated up to 350°C at 20°C/min, and maintained for 2 min at 350°C; resin thermal history was removed, and then the sample was cooled to 50°C at 20°C/min and maintained for 2 min at 50°C, heated up to 350°C at 20°C/min, and the endothermic peak temperature at this time was set as the melting point Tm.
(3) Water absorption rate of the polyamide: the sample was injected into 20 mm× 20 mm× 2 mm sample plate with a weight denoted as a0. The sample was then placed into 95°C water, 240 h later, its weight was weighed and denoted as a1. Water absorption rate =(a1-a0)/a0*100%.
(4) Polyamide shrinkage rate: the sample was injected into 20 mm× 10 mm× 2 mm sample plate, and then placed into 95°C water, 240 hours later, its shrinkage rate after absorbing water was tested according to the ISO 294-4-2018 standard.
(5) Flame retardance: referring to the UL94 V-0 test standard, the standard strip-type sample has a length of 125±5 mm, a width of 13.0±0.5 mm and a thickness of 0.8 mm; 5 samples were treated at least for 48 h at 23±2°C and 50± 5%. Flame of a Bunsen burner was aligned at the center of the lower end of the sample; the center of the top surface of the Bunsen burner tube was kept 10±1 mm away from the lower end face of the sample for 10±0.5 S; the Bunsen burner was moved with the change of the length and position of the sample if necessary. Flame was applied to the test sample for 10±0.5 S, and the Bunsen burner was then immediately removed to at least 150 mm away from the test sample at about 300 mm/s. Meanwhile, flame combustion time T1 (unit: s) of the test sample was determined with a timing device. After the flame combustion of the test sample was over, even though the Bunsen burner was not removed to 150 mm away from the test sample, the port of the Bunsen burner was immediately removed and kept 10±1 mm away from the lower end face of the sample, and fame was then applied again for 10±0.5 S; the Bunsen burner was removed to clear away drippings if necessary, and after flame application, the Bunsen burner was immediately removed to at least 150 mm away from the test sample; meanwhile, the time device was turned on to determine the flame time T2 and flame-free time T3 of the test sample; if T1+T2+T3 of the 5 test samples was less than 10 s, and there was no dripping to ignite the lower cotton, it was regarded to meet the V-0 conditions.

**Table 1: proportions of each monomer of the polyamide resins in Examples 1-6 and test results thereof**

| | Exam ple 1 | Exam ple 2 | Exam ple 3 | Exam ple 4 | Exam ple 5 | Exam ple 6 | Exam ple 7 | Exam ple 8 |
|---|---|---|---|---|---|---|---|---|
| Resin No. | A | B | C | D | E | F | G | H |
| 2,5-furandicarboxy lic acid/mol | 5 | 10 | 15 | 25 | 35 | 45 | 20 | 20 |
| 1,4-cyclohexanedi carboxylic acid/mol | 95 | 90 | 85 | 75 | 65 | 55 | 80 | 80 |
| 1,10-decanediamin e/mol | 100 | 100 | 100 | 100 | 100 | 100 | 100 | 100 |
| Relative viscosity ηr | 2.13 | 2.15 | 2.15 | 2.13 | 2.17 | 2.12 | 1.83 | 2.37 |
| Melting point Tm/°C | 336 | 334 | 321 | 308 | 296 | 290 | 215 | 216 |
| Water absorption rate/% | 1.1 | 1.1 | 1.2 | 1.2 | 1.4 | 1.5 | 1.2 | 1.2 |
| Lateral/Longitudin al shrinkage rate/% | 0.1/0. 4 | 0.1/0. 4 | 0.1/0. 5 | 0.1/0. 5 | 0.2/0. 5 | 0.2/0. 5 | 0.1/0. 5 | 0.1/0. 5 |

As can be seen from Examples 1-6, the higher the 1,4-cyclohexanedicarboxylic acid is, the higher the melting point is and the lower the water absorption rate and shrinkage rate are.

**Continued table 1: proportions of each monomer of the polyamide resins in Comparative Examples 1-8 and test results thereof**

| | Comp arativ e Exam ple 1 | Comp arativ e Exam ple 2 | Comp arativ e Exam ple 3 | Comp arativ e Exam ple 4 | Comp arativ e Exam ple 5 | Comp arativ e Exam ple 6 | Comp arativ e Exam ple 7 | Comp arativ e Exam ple 8 |
|---|---|---|---|---|---|---|---|---|
| Resin No. | I | J | K | L | M | N | O | P |
| 2,5-furandicarb oxylic acid/mol | 0 | 2.5 | 50 | | | 20 | 20 | 20 |
| 1,4-cyclohexan edicarboxylic acid/mol | 100 | 97.5 | 50 | | | | | 80 |
| 1,6-hexanedioi c acid/mol | | | | 40 | | 80 | | |
| Terephthalic acid/mol | | | | 60 | 100 | | 80 | |
| 1,10-decanedia mine/mol | 100 | 100 | 100 | | 100 | 100 | 100 | |
| 1,5-pentanedia mine/mol | | | | | | | | 100 |
| 1,6-hexamethyl enediamine/mo l | | | | 100 | | | | |
| Relative viscosity ηr | 2.19 | 2.16 | 2.15 | 2.17 | 2.13 | 2.14 | 2.16 | 2.18 |
| Melting point Tm/°C | 352 | 345 | 283 | 312 | 317 | 234 | 302 | 322 |
| Water absorption rate/% | 0.9 | 1.0 | 1.6 | 5.2 | 1.6 | 1.8 | 1.6 | 2.4 |
| Lateral/Longitu dinal shrinkage rate/% | 0.1/0. 3 | 0.1/0. 4 | 0.2/0. 6 | 1.5/1. 9 | 0.2/0. 6 | 0.3/0. 7 | 0.2/0. 6 | 0.3/0. 7 |

The furan diacid-based polyamide resin in Comparative Example 1/2 has a melting point of greater than decomposition temperature and thus, has no use value.

As can be seen from Comparative Example 3, the higher the 2,5-furandicarboxylic acid is, the higher the water absorption rate and shrinkage rate are, the lower the melting point is, and the use value is low.

As can be seen from Comparative Example 6, when cyclohexanedicarboxylic acid is replaced with adipic acid, the amido bond density decreases, while the water absorption rate increases; the shrinkage rate is poor and the melting point is too low.

As can be seen from Comparative Example 7, when cyclohexanedicarboxylic acid is replaced with terephthalic acid with the similar structure, the water absorption rate is also too high, and the shrinkage rate is low.

As can be seen from Comparative Example 8, the polyamide of the furandicarboxylic acid/cyclohexanedicarboxylic acid/pentanediamine chain segment system has a poor shrinkage rate.

**Table 3: proportions (part by weight) of each monomer of the polyamide compositions in Examples 9-16 and Comparative Examples 9-16 and each performance test result thereof**

| | Exam ple 9 | Exam ple 10 | Exam ple 11 | Exam ple 12 | Exam ple 13 | Exam ple 14 | Exam ple 15 | Exam ple 16 |
|---|---|---|---|---|---|---|---|---|
| Employed resin No. | A | B | C | D | E | F | G | H |
| Resin content | 58 | 58 | 58 | 58 | 58 | 58 | 40 | 69 |
| Halogen-free flame retardant A | 12 | 12 | 12 | 12 | 12 | 12 | 10 | |
| Halogen-free flame retardant B | | | | | | | | 21 |
| Reinforcing filler | 30 | 30 | 30 | 30 | 30 | 30 | 50 | 10 |
| UL-94 flame retardant rating | V-0 | V-0 | V-0 | V-0 | V-0 | V-0 | V-0 | V-0 |
| Lateral/Longit udinal shrinkage rate/% | 0/0.1 | 0/0 | 0/0.1 | 0/0.1 | 0.1/0. 1 | 0.1/0. 1 | 0/0.1 | 0/0.1 |

As can be seen from Examples 7-12, the furan diacid-based polyamide composition of the present invention has good flame retardance.

**Continued table 3:**

| | Com parat ive Exa mple 9 | Com parat ive Exa mple 10 | Comp arativ e Exam ple 11 | Comp arativ e Exam ple 12 | Comp arativ e Exam ple 13 | Comp arative Exam ple 14 | Comp arative Exam ple 15 | Comp arative Examp le 16 |
|---|---|---|---|---|---|---|---|---|
| Employed resin No. | I | J | K | L | M | N | O | P |
| Resin content | 58 | 58 | 58 | 58 | 58 | 58 | 58 | 58 |
| Halogen-free flame retardant A | 12 | 12 | 12 | 12 | 12 | 12 | 12 | 12 |
| Reinforcing filler | 30 | 30 | 30 | 30 | 30 | 30 | 30 | 30 |
| UL-94 flame retardant rating | Fail to mold | Fail to mold | Fail to mold | V-1 | V-1 | Fail to mold | V-1 | V-0 |
| Lateral/Longit udinal shrinkage rate/% | - | - | - | 0.3/0. 5 | 0.1/0. 2 | | 0.1/0. 2 | 0.1/0.3 |

As can be seen from Comparative Examples 9-11, too high or too low melting point will lead to the failure of modifying and molding.

As can be seen from Comparative Examples 12/13/15/16, when 1,4-cyclohexanedicarboxylic acid or 1,5-pentanediamine is replaced with other diacids/diamines, the furan diacid-based polyamide composition or other polyamide compositions has poor flame retardance, and high lateral/longitudinal shrinkage rate.

## Claims

1. A furan diacid-based polyamide resin, derived from the following repeating units: (A) 2,5-furandicarboxylic acid, (B) 1,4-cyclohexanedicarboxylic acid, and (C)1,10-decanediamine, wherein based on a total molar percentage of the diacid units, (A) accounts for 5-45 mol% of the diacid units.

2. The furan diacid-based polyamide resin according to claim 1, **characterized in that**, based on the total molar percentage of the diacid units, (A) accounts for 5-25 mol% of the diacid units.

3. The furan diacid-based polyamide resin according to claim 2, **characterized in that**, based on the total molar percentage of the diacid units, (A) accounts for 5-15 mol% of the diacid units.

4. The furan diacid-based polyamide resin according to claim 1, **characterized in that**, the furan diacid-based polyamide resin has a relative viscosity of 1.8-2.4.

5. The furan diacid-based polyamide resin according to claim 1, **characterized in that**, the furan diacid-based polyamide resin has a melting point of 290-336°C.

6. The furan diacid-based polyamide resin according to claim 1, **characterized in that**, the furan diacid-based polyamide resin has a water absorption rate of less than or equal to 1.5%; and the furan diacid-based polyamide resin has a lateral/longitudinal shrinkage rate of 0.2%/0.5%.

7. A method for preparing the furan diacid-based polyamide resin according to any one of claims 1-6, comprising the following steps: adding reaction materials to a pressure reactor in proportion; and adding benzoic acid, sodium hypophosphite and deionized water, performing vacuumizing and pumping high-purity nitrogen as a shielding gas into the pressure reactor, heating up to 210-230°C within 2 h under stirring conditions, and mixing a reaction mixture for 0.5-2 h at 210-230°C, **characterized in that**, the amount of benzoic acid is 2-3% of a total weight of diamine and diacid, the amount of sodium hypophosphite is 0.05-0.15% of a weight of other materials other than deionized water, and the amount of deionized water is 25-35% of a weight of the total materials; heating a reactant up to 220-240°C under stirring conditions, proceeding with reaction for 1-3 h at a constant temperature of 220-240°C and a constant pressure of 2.1-2.3 MPa, keeping the pressure constant by removing water formed, performing discharging after finishing the reaction, vacuum drying a prepolymer at 70-90°C to obtain a prepolymerized product, and performing solid phase viscosification on the prepolymerized product for 8-12 h at 240-260°C and a vacuum condition of 40-60 Pa, to obtain the furan diacid-based polyamide resin.

8. A polyamide molding composition, comprising the following components in parts by weight:
40-70 parts of the furan diacid-based polyamide resin according to any one of claims 1-6;
10-30 parts of a halogen-free flame retardant; and
0-50 parts of a reinforcing material.

9. The polyamide molding composition according to claim 8, **characterized in that**, the halogen-free flame retardant is selected from at least one of the group consisting of a phosphine flame retardant, a hypophosphorous acid ester flame retardant, a hypophosphorous acid salt flame retardant, a phosphinate ester flame retardant, a phosphinate salt flame retardant, a phosphite ester flame retardant, a phosphite salt flame retardant, a phosphine oxide flame retardant, a hypophosphite ester flame retardant, a hypophosphite salt flame retardant, a phosphonate ester flame retardant, a phosphonate salt flame retardant, a phosphate ester flame retardant, and a polyphosphate flame retardant; the hypophosphite salt flame retardant is selected from at least one of the group consisting of aluminum hypophosphite, calcium hypophosphite, aluminum dimethylhypophosphite, aluminum diethylhypophosphite, and aluminum methylethylhypophosphite; the phosphate ester flame retardant is selected from at least one of the group consisting of bisphenol A bis(diphenyl phosphate), phenoxyphosphazene, resorcinol (diphenyl phosphate), triphenyl phosphate, melamine polyphosphate and melamine cyanurate; and the polyphosphate flame retardant is selected from at least one of the group consisting of ammonium polyphosphate, melamine phosphate, melamine pyrophosphate and melamine polyphosphate.

10. The polyamide molding composition according to claim 8, **characterized in that**, the reinforcing material is selected from at least one of the group consisting of a fibrous filler and a nonfibrous filler; the fibrous filler is selected from at least one of the group consisting of a glass fiber, a carbon fiber, a basalt fiber, a bamboo fiber, fibrilia, a cellulosic fiber and an aramid fiber; and the nonfibrous filler is selected from at least one of the group consisting of aluminium oxide, carbon black, clay, zirconium phosphate, kaolin, calcium carbonate, copper powder, kieselguhr, graphite, mica, silica, titanium dioxide, zeolite, talc, wollastonite, glass bead and glass powder.
